# EUROPEAN PATENT SPECIFICATION

(11) **EP 0 859 985 B1**
(45) Date of publication and mention of the grant of the patent: **05.01.2000**
(21) Application number: 96938742.2
(22) Date of filing: 31.10.1996
(51) Int. Cl.: G06F 17/30, G06F 9/44

(54) **LOCAL AND ZONE TIME DATA CONVERSION PROCESSING FOR DATE-DEPENDENT INFORMATION WHICH SPANS ONE OR TWO CENTURIES**
LOKAL- UND ZONENZEIT- DATENKONVERSION FÜR SICH ÜBER EIN ODER ZWEIJAHRHUNDERTE ERSTRECKENDE DATUMSABHÄNGIGE INFORMATIONEN
TRAITEMENT DE CONVERSION DE DONNEES D'HEURE LOCALE ET D'HEURE DE ZONE CONCERNANT DES INFORMATIONS DEPENDANTES DE LA DATE ET COUVRANT UN OU DEUX SIECLES

(30) Priority: 01.11.1995 US 7164 P; 14.11.1995 US 557457
(43) Date of publication of application: 26.08.1998
(73) Proprietor: Turn of The Century Solution, L.P., Wayne, PA 19087 (US)
(72) Inventor: ALTER, Harvey, Ambler, PA 19002-3114 (US)
(74) Representative: Ablett, Graham Keith
(86) International application number: US9617637
(87) International publication number: WO9716795

(56) References cited:
- US-A- 3 765 111
- US-A- 5 222 052
- BILL GOODWIN: "Milleniumania - The End Is Near! Are You Prepared?" SYSTEM DEVELOPMENT, March 1992, pages 6-9, XP000571031
- J. CELKO: "Start Fixing Year 2000 Problems Now!" DATAMATION, 1 January 1996, pages 36-38, XP000674123
- HASZARD, MURRAY, Julian Dates (Does Bbasic need a Greater than 2-byte Precision), DG Review, July 1988, Vol. 9, No. 1, pages 12-15.
- POLLENS, RICH, Consulting Tip, Data Based Advisor, July 1991, Vol. 9, No. 7, page 36.
- McCARTY, SHAWN, P., Hold the Noisemakers: Why System Managers Dread Midnight, 12-31-99, Government Computer News, 8 November 1993, Vol. 12, No. 24.
- McKENDRICK, JOSEPH, A Once in a Century Crisis. (How Mis is Preparing for Converting Dates to the Year 2000), MIDRANGE SYSTEMS, 30 June 1995, Vol. 8, No. 12, pages 17-18.
- PAUL O:"The Software Crisis of the Century" PAUL O, "Baltimore", 22-09-1995, EILL, ILL

## Description

### Field of the Invention

The present invention relates to a system and method for processing date-dependent information in which the years are specified in a two-digit format and span more than one century. More particularly, the present invention relates to a system and method for processing date-dependent information in accordance with existing applications when the date-dependent information bridges more than one century.

### Background of the Invention

Due to the high cost of memory in early computing systems or for convenience, date information has been and is still, stored in two-digit year formats. Information processing systems such as those used for accounting, inventory, and insurance, include numerous records containing date-related information. Large entities often design and maintain their own information processing systems, while smaller entities may purchase off-the-shelf software to perform their information processing. As the turn of the century approaches (defined herein as the year 2000), the information processing world is seeking solutions to avoid catastrophic failures that will result from existing applications that process date-dependent information with two-digit year formats.

Solutions have been suggested to combat the turn-of-the century problem. However, most of these solutions involve the conversion of all two-digit years to four-digit years. The drawbacks associated with such solutions are numerous. For example, all of the date fields in existing databases and flat files would require reformatting. Data definitions and internal work areas in application programs would also require reformatting. Similarly, all date-handling routines utilized by the application programs would need to be rewritten to accommodate four-digit year data. Thus most of the existing applications, whether custom designed or off-the-shelf will require substantial file reformatting and rewriting of routines at great expense in terms of cost and time. Moreover, those entities that rely on off-the-shelf products for information processing must rely on their vendors to implement such costly solutions before the turn of the century.

Consequently, a less onerous solution has been suggested, for example in a presentation made by Paul O'Neil at "The Fifth Millennial Maintenance Conference", held on September 22nd 1995 at Baltimore/Washington International Airport, in which the two-digit years are not converted to four-digit years. According to this solution, the application program code is modified so that each year that is read from the application's master file or other data files is reduced by 28 years. In this way all dates up to December 31, 2027 are reduced back into the twentieth century and all of the date processing can occur in a single century. Once the program data is converted back in time and processed, the program data is increased by 28 years so that the resulting output dates reflect the actual or correct date.

A significant drawback associated with this solution is that it will still be necessary for a programmer to locate all of the points in the application program code where dates specified by the program data are input for processing or output after processing. At each of these points, code must be inserted to perform the date conversion. Thus each time the same date data is accessed it must be converted as program data by modified application code.

Accordingly, there still exists a need for a system and method for processing date-dependent data in a simple manner that does not require extensive programming changes to existing application software.

### Summary of the Invention

This need is fulfilled by the present invention by providing a system that processes date-dependent information in which the dates are specified in a two-digit format and are in at most two centuries. The system according to the invention includes a number of local data files having dates represented in local time, a number of zone data files having dates represented in zone time, and at least one time change interface between the local data files and the zone data files that converts the dates represented in local time to dates represented in zone time and converts the dates represented in zone time to dates represented in local time.

The expression "local time" is used herein to refer to the current local date and time. The expression "zone time" refers to the local time shifted or offset by a preselected year-changing value designated as "Year.change" and falling within one century. The meaning of these terms will be clearer when read in the context of the following disclosure.

The dates represented in zone time are processed by a selected application. The local data files comprise at least one external data file that is generated and modified by a source external to the selected application. The selected application comprises a master data file having dates represented in local time. The dates in the master file are preferably converted in advance from local time to zone time. In a preferred embodiment, the system further includes a zone switch interfaced to each of the time change interfaces and activates and deactivates the time change interfaces. In another preferred embodiment, the relative difference between the local time and the zone time is represented by a number of years that is a multiple integer of 4.

In an alternative embodiment, the system may include a source of on-line input date data and provide an output of on-line output date data generated by the application. The application may then include a time change interface to accept an input of the on-line input date data and to output on-line output date data. Such a time change interface according to this embodiment of the invention converts the dates represented in local time to dates represented in zone time and converts the dates represented in zone time to dates represented in local time.

The present invention also provides a method for processing date-dependent information including dates specified in a two-digit format and in at most two centuries. The steps according to the inventive method include converting input date data to be processed from local time to zone time, processing the zone input date data in accordance with a selected application to generate zone output date data, and converting the zone output date data into output date data represented in local time. In a preferred embodiment, the input date data comprises a number of input years and the step of converting the input date data from local time to zone time includes the steps of defining a time change indicative of a number of years to adjust the local time, and subtracting the time change from at least some of the input years to generate output years represented in zone time that are processed in accordance with the selected application. In a more preferred embodiment, this step also includes generating a complement value representing the difference between one hundred years and the time change, and adding the complement value to each input year that is less than the time change to generate an output year represented in zone time that is processed in accordance with the selected application. In this preferred embodiment, the zone output date data comprises a number of input years represented in zone time and the step of converting the zone output date data into output date data includes the steps of adding the time change to at least some of the input years represented in zone time to generate corresponding output years represented in local time, and subtracting the complement value from each input year represented in zone time that is not less than the complement value to generate a corresponding output year represented in local time.

Another aspect of the invention is that the system may be simply tested in accordance with the following steps. First a set of input test data comprising dates in one century is defined. Then the input test data is processed in accordance with the selected application while the invention is deactivated to generate output test data. The input test data is processed when the invention is activated to generate the output date data. The output test data and the output date data are then compared to verify that the output date data is identical to the output test data. When the output test data and the output date data are not identical the primary source of error is the time change interfaces. Accordingly, in most cases the error can be readily identified and corrected.

### Brief Description of the Drawings

The present invention will be better understood, and its numerous objects and advantages will become apparent by reference to the following detailed description of the invention when taken in conjunction with the following drawings, in which:
Figure 1 shows one implementation of the system according to the invention in connection with a batch processing application;
Figure 2 shows one implementation of the invention in connection with on-line application processing;
Figure 3A shows an interface diagram for an application processing date data in which the invention has been deactivated;
Figure 3B shows an interface diagram for an application processing date data in which the invention has been activated;
Figure 4 shows a diagram of the steps carried out by PROCEDURE.1 in accordance with a preferred embodiment of the present invention;
Figure 5 shows a flow diagram of the steps carried out by PROCEDURE.2 in accordance with a preferred embodiment of the present invention;
Figure 6 shows a flow diagram of the overall process implemented according to a preferred embodiment of the present invention;
Figure 7 shows a detailed flow diagram of the initialization process according to an embodiment of the present invention;
Figure 8 shows a detailed flow diagram of the master data file conversion process according to an embodiment of the present invention;
Figure 9 shows a detailed flow diagram of the input date data conversion process according to an embodiment of the present invention;
Figure 10 shows a detailed flow diagram of the program execution step; and
Figure 11 shows a detailed flow diagram of the zone output data conversion process according to an embodiment of the present invention.

### Detailed Description of the Invention

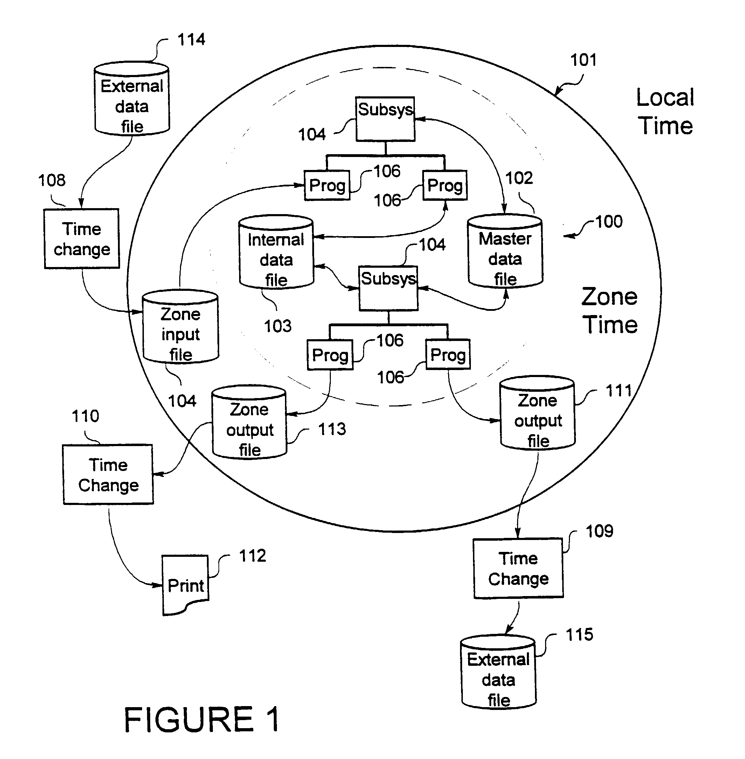

The invention will now be described in connection with Figures 1-11 in which like reference numerals in the Figures refer to like elements.

Figure 1 shows one implementation of the system according to the invention in connection with a batch processing application. The application 100 comprises a master data file 102 and subsystems 104. Each subsystem includes a plurality of programs 106. The application 100 may include other internal data files 103. The application may receive input data from one or more external sources such as operating system data or data files generated by other applications. This data is shown in Figure 1 as the external data file 114. The application may also output data to an external data file 115 that can be accessed by other applications or by users. Data may also be output from the application to a printer 112.

In accordance with the present invention, all date data is preferably converted prior to processing by the application so that the years are confined to a single century. Once the date data has been converted the dates are said to be represented in zone time. The actual or true date data, prior to conversion, is represented in local time. A time boundary 101 depicts the division of the programs and files that reference dates in zone time and those that reference dates in local time.

Time change interfaces 108, 109, and 110 are provided to convert date data between local time and zone time. Specifically a time change value (Year.change) is preselected and is used to adjust all of the year fields in external data files represented in local time to zone time and to convert year fields output from the application in zone time to local time. Details concerning the selection of a value for Year.change are provided below.

As shown in Figure 1, time change interface 108 converts the date data from external data file 114 and outputs the converted date data into zone input data file 104. Application 100 outputs date data into zone output data files 111, 113 and time change interfaces 109, 110, respectively convert the date data from zone time to local time. The converted output data is then stored in external data file 115 or printed from printer 112, respectively. Thus, some of the files external to application 100 are local data files (e.g., external data files 114, 115) while others are zone data files (e.g., zone input file 104 and zone output files 111, 113). As shown in Figure 1, the application files (e.g., the master data file 102 and the internal data file 103) are likewise zone data files in accordance with the invention.

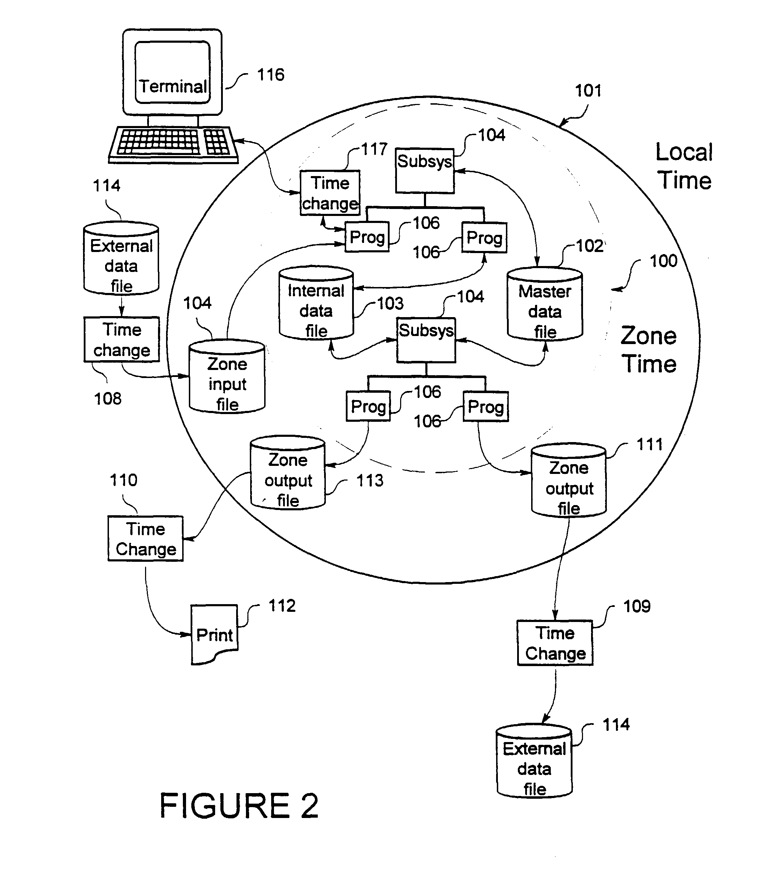

Figure 2 shows a second implementation of the invention in connection with on-line application processing. Because on-line data is difficult to capture between the source of the data, i.e. terminal 116, and the application, it is preferable to modify the application to include a time change interface 117. In the embodiment shown in Figure 2, the time change interface 117 is adapted to convert the on-line date data from local time to zone time and to also convert the date data to be output from the application to the terminal from zone time to local time.

It should be understood that any of the time change interfaces shown in Figures 1 and 2 may be adapted to convert from local time to zone time and from zone time to local time. Moreover, it should also be understood that a different number of time change interfaces could be used so that data files share a single time change interface.

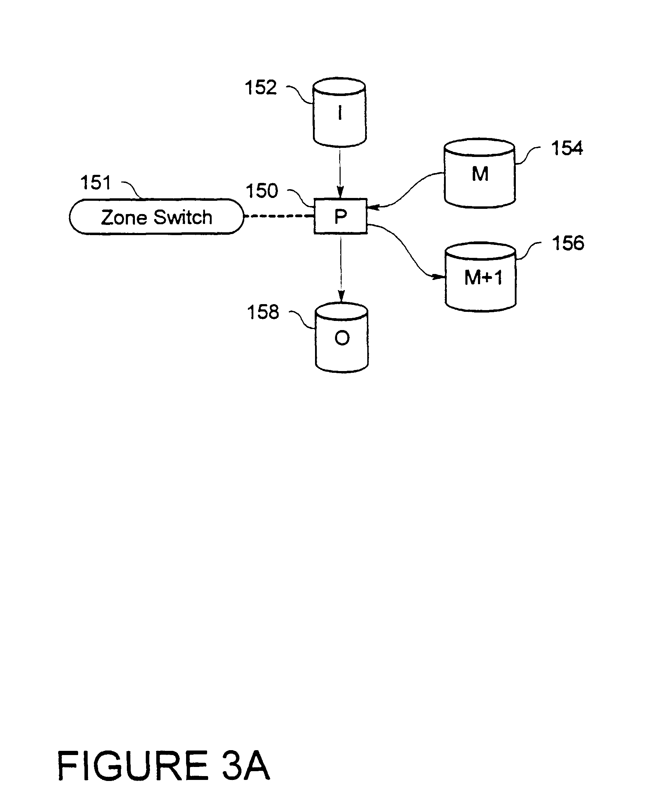

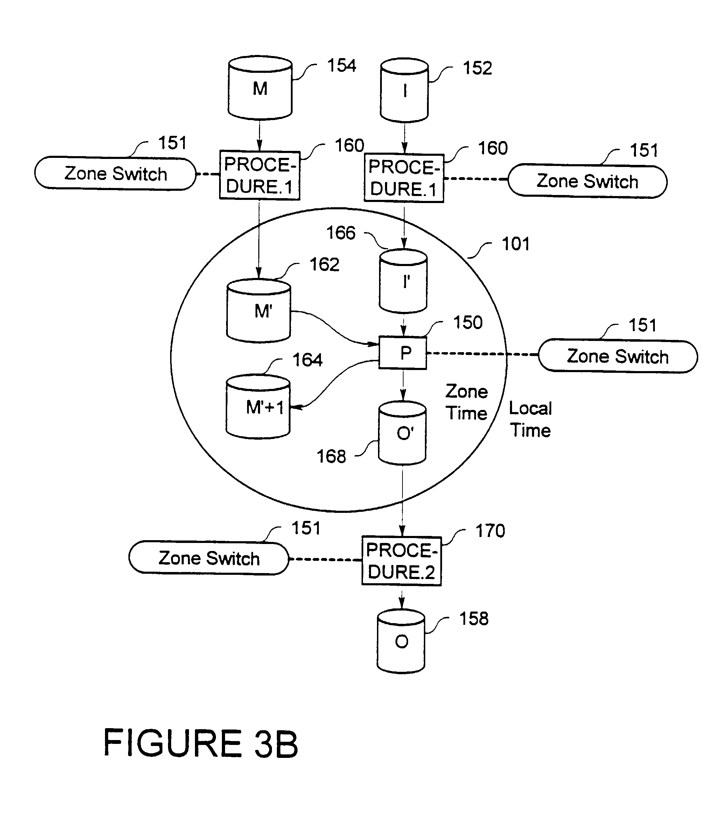

The method that is carried out by the invention will now be described in further detail with reference to Figures 3A and 3B. Figure 3A shows an interface diagram for an application processing date data in which the invention has been deactivated. In a preferred embodiment, a zone switch 151 is provided that is capable of deactivating the invention, for example, when all of the dates in local time are in one century. The switch may be implemented using a number of different techniques such as by defining a job parameter or by writing conditional code into the time change interfaces. It should be understood that in many mainframe applications, the switch may be tested for activation/deactivation definition at the operating system level rather than the program level. Therefore, the dashed lines between the switch 151 and the various programs or procedures shown in Figures 3A and 3B represent a functional interface in such systems rather than an actual interface.

The application program code (P) 150 reads input data from input data file (I) 152. The data from the application master data file (M) 154 is modified by P based on data from I. The modified data may be stored in an updated master data file (M+1) 156. Output data generated by P is output from the application and may be written to output data file (O) 158. Assuming the zone switch 151 is deactivated, no conversion between local time and zone time is carried out in accordance with a preferred embodiment of the invention.

Figure 3B shows an interface diagram for an application processing date data in which the invention is activated by zone switch 151. When zone switch 151 is activated, PROCEDURE.1 at 160 and PROCEDURE.2 at 170 are executed in accordance with the present invention. PROCEDURE.1 is used to convert date data stored in M from local time to zone time. The converted M date data is stored in a zone master data file (M') 162. PROCEDURE.1 is also executed to convert date data retrieved from I from local time to zone time. The converted I date data is stored in a zone input data file (I') 166. Based on the date data from I', the application modifies the data stored in M' and stores the modified zone data in an updated zone master data file (M'+1) 164. The application P generates zone output data and writes this data to zone output file (O') 168. PROCEDURE.2 converts the zone date data from O' from zone time to local time to generate output date data that is written to output data file (O) 158.

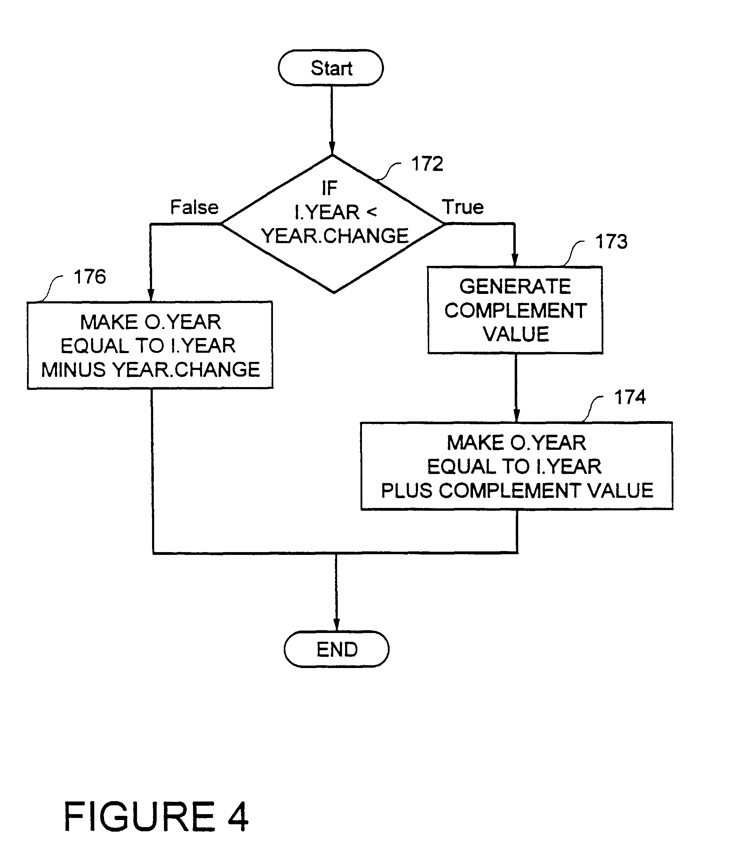

Figure 4 shows a flow diagram of the steps carried out by PROCEDURE.1. The first step in the procedure shown at 172 compares each input year (I.year) retrieved from I or M with the value of year.change. Hence, if year.change is selected to be 20, then all years from 2000 up to and including 2019 are identified by step 172. Recall that year.change is the year value used to adjust all the year fields in substantially all files that are accessed by the application. The actual value that is selected is discussed in more detail below.

If the input year is less than year.change as shown at 172 a complement value is generated at 173. The complement value is the difference between 100, the number of years in a century, and the value of year.change. Thus considering the example in which year.change is 20, the complement value would be 80. The next step at 174 is to add the complement value to the input year thereby generating the output year (O.year) which is the year to be included in the zone input file I' or the zone master data file M'. According to the example, all years between 2000 and 2019 (i.e., in two-digit format 00, 01, 02, etc.) are reduced to years between 1980 and 1999 (i.e., in two-digit format 80, 81, 82, etc.) respectively. If the input year is not less than year.change the output year (O.year), the year to be stored in I' or M', is generated by subtracting year.change from I.year. Thus where year.change is 20, years prior to 2000 are reduced by 20 years.

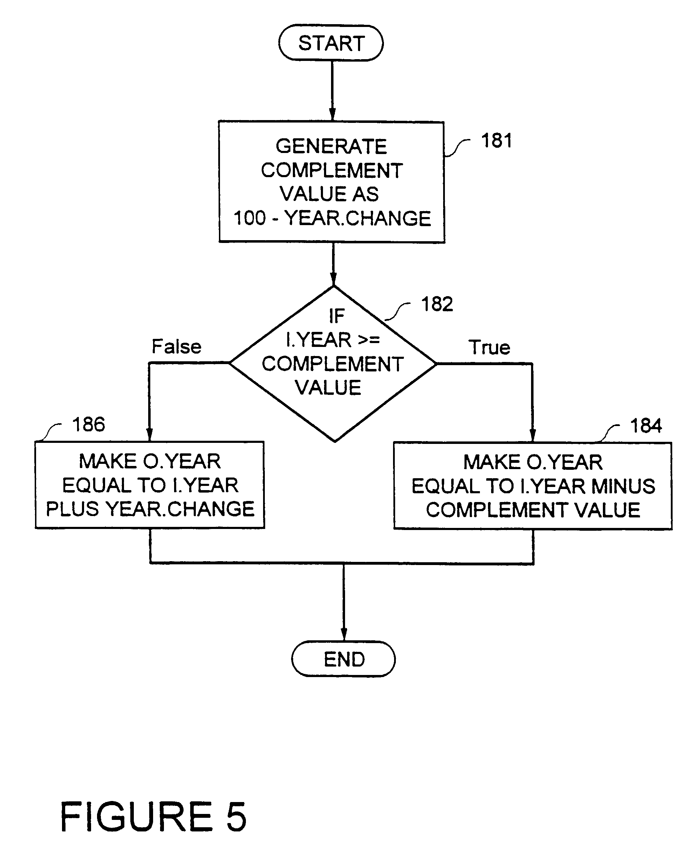

Figure 5 shows a flow diagram of the steps carried out by PROCEDURE.2. The first step in the procedure is to generate the complement value as shown at 181. Since the complement value should be the same value that was generated in PROCEDURE.1, the complement value may be retrieved from a commonly accessible memory location rather than regenerated. The next step is to determine whether or not the input year (I.year) retrieved from O' is greater than or equal to the complement value as shown at 182. If the input year is less than the complement value then the output year (O.year) to be stored in O is generated by adding year.change to the input year. If the input year, however, is greater than or equal to the complement value then the output year is generated by subtracting the complement value from the input year. Again considering the example in which year.change is set to 20, the complement value is 80. Thus all zone output dates that are 1980 or later (in two-digit format 80, 81, 82, etc.) are adjusted to local time by subtracting 80 (in corresponding two-digit format 00, 01, 02, etc.) to accurately provide output dates in the twenty first century.

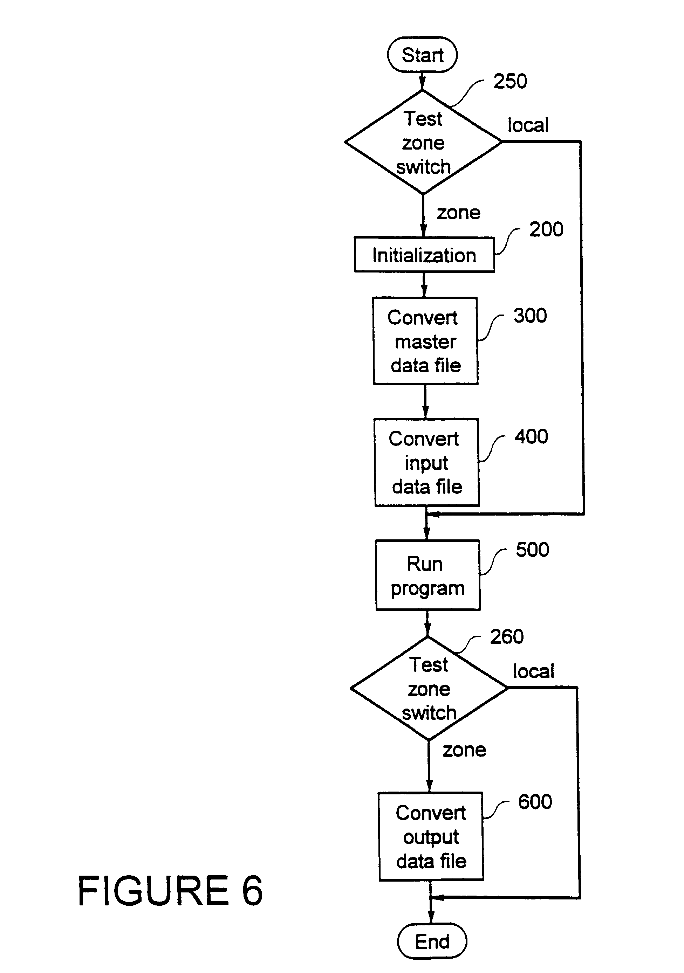

Figure 6 shows a flow diagram of the overall process implemented according to a preferred embodiment of the present invention. The zone switch which was discussed above in connection with Figures 3A and 3B is tested at step 250 to determine whether the switch is activated or deactivated. If the switch is deactivated the application program is run at step 500. The switch is then tested again at step 260. Since the switch is deactivated, the process exits and all of the date data is processed in local time as also shown in Figure 3A.

However, when the switch is activated as determined at step 250, a general initialization procedure is carried out at 200. The master data file M is then converted at step 300 followed by the conversion of the input data file I at step 400. It should be understood that the master data file may only require conversion according to step 300 one time, but the step of converting I, may be repeated over and over again with each new or distinct input data file I and for each periodic execution of the application.

The zone master data file M' is then modified according to the selected application at step 500. The final step in the overall process according to a preferred embodiment of the invention is to convert the zone output date data from O' to output date data that is written to O at step 600.

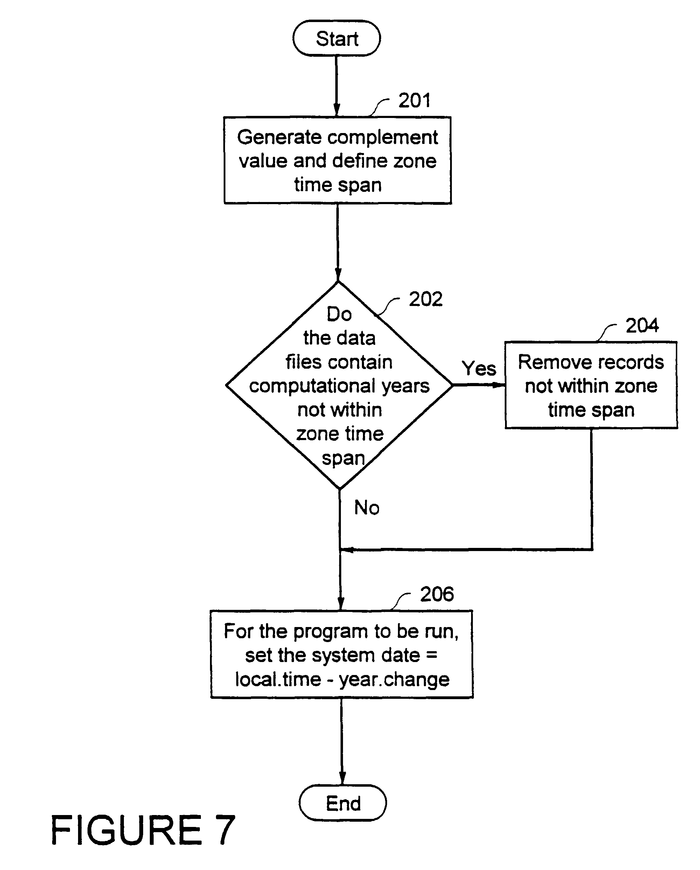

Figure 7 shows a detailed flow diagram of the initialization process shown at step 200 in Figure 6. In a preferred embodiment, the initialization process, among other things, removes records that are not handled according to PROCEDURE.1 and PROCEDURE.2. Such records include input date data having years that fall outside of the zone time span. The zone time span has a total length equal to the number years in a century (100 years) and begins with the year 1900 plus the year.change. Thus if year.change is 20 the zone time span includes all dates between January 1, 1920 through December 31, 2019. (Note that in actual practice because 1900 is not a leap year, zone time span should be reduced to 99 years and the beginning year increased by one.) According to a preferred embodiment, PROCEDURE.1 is adapted to convert years represented in local time within the zone time span and PROCEDURE.2 is adapted to convert years represented in zone time to years within the zone time span. Some of the input years may be computational years, i.e., fields used in arithmetic or comparison operations, and others may be purely informational years, i.e., fields not used in arithmetic or comparison operations. It should be understood, that for purposes of processing input years with two-digit year formats after the turn of the century, only computational years must be converted in accordance with the present invention. However, to avoid the labor of having to distinguish between computational and informational years through tedious program analysis, all years are preferably converted.

Thus the first step in the initialization process shown in Figure 7 is to generate the complement value and define the zone time span as shown at step 201. The next step in the process is to determine whether or not any date data in any of the input data files (I) or master data files (M) to be accessed by the application contain any dates with computational years that are not within the zone time span as shown at 202. If there are computational years that are identified as being outside the zone time span, then those data records related to the identified computational years are removed from I and M, and are not processed in accordance with the invention as shown at step 204.

Once those records are removed or if no computational years outside the zone time span have been identified, then the system date is set to a zone date by subtracting year.change from local time as shown at step 206. It should be understood that in the event that any of the steps of the application program call for a system date, the system date must also be converted when the invention is activated. The system date conversion may be provided by a separate procedure or a known utility can be used to convert the system date to the selected date at step 206. Such known software includes HOURGLASS 2000 available from Mainware, Inc. and PORTAL 2000, available from Prince Software, Inc.

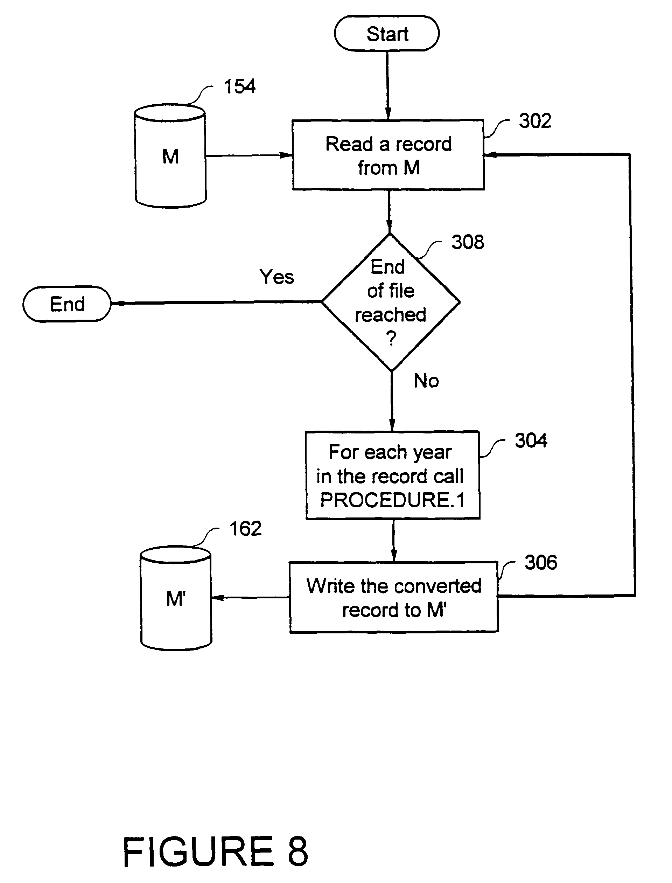

Figure 8 shows a detailed flow diagram of the steps carried out in connection with the master data file conversion process shown at step 300 in Figure 6. The master data file (M) at 154 is read to retrieve a record from that file as shown at step 302. When no more records exist in M to be read, as determined at step 308, the master data file conversion is complete. For each input year in the retrieved record, PROCEDURE.1 is called at step 304. Recall that PROCEDURE.1 converts the date data in the master data file to zone time in accordance with the steps shown in Figure 4. Once the input year has been converted to zone time the record is written to the zone master data file M' as shown at 162.

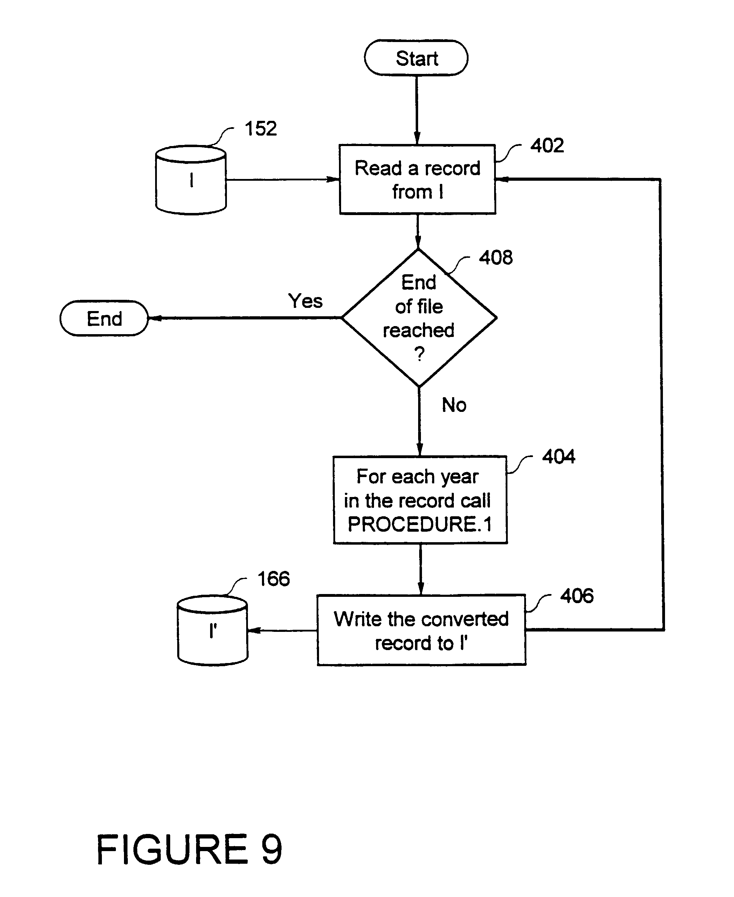

Figure 9 shows a detailed flow chart of the input data file conversion process shown at step 400 in Figure 6. A single record is read from the input data file (I) 152 as shown at step 402. Once each record has been read and converted as determined in step 408, the input data file conversion for a particular input data file (I) is complete. For each input year in the retrieved record, PROCEDURE.1 is called at step 404 to convert the input years represented in local time to zone time. The converted date data is then written at step 406 into the zone input file (I') 166.

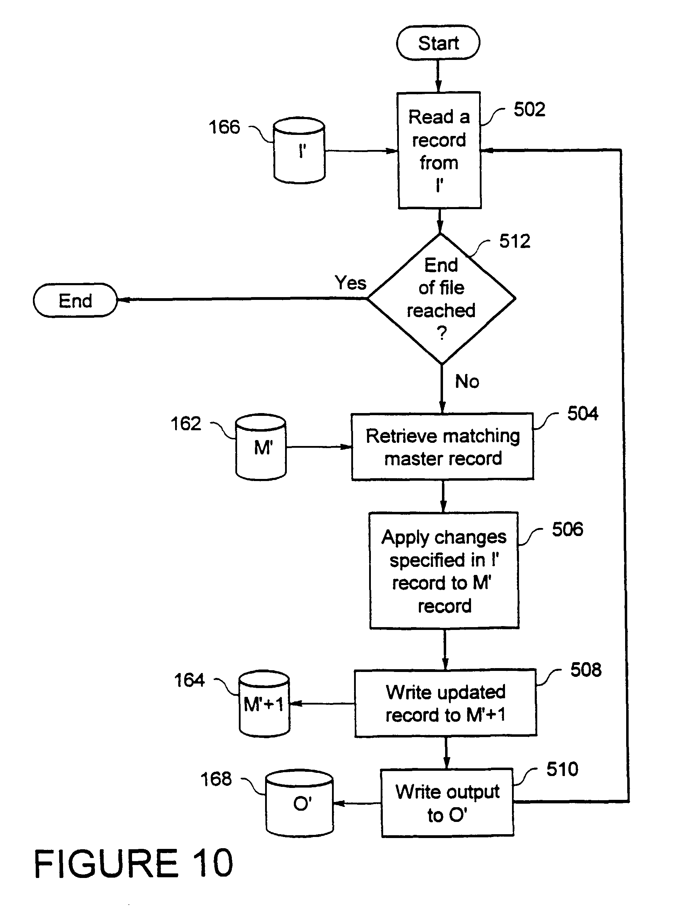

Figure 10 shows a detailed flow diagram of the program execution step 500 shown in Figure 6. A record is read from I' 166 as shown at step 502. Once each of the records has been read and processed in accordance with steps 502 through 510 as determined at step 512 the program may be exited. A corresponding master record is retrieved at step 504 from M' 162 and the master data is modified as specified by the data associated with the record retrieved from I' at step 506. The updated master data is then written to the zone master data file at step 508 which, as modified, is referred to as the updated zone master data file (M'+1) 164. The zone output data is then written to the zone output file (O') 168 as shown at step 510.

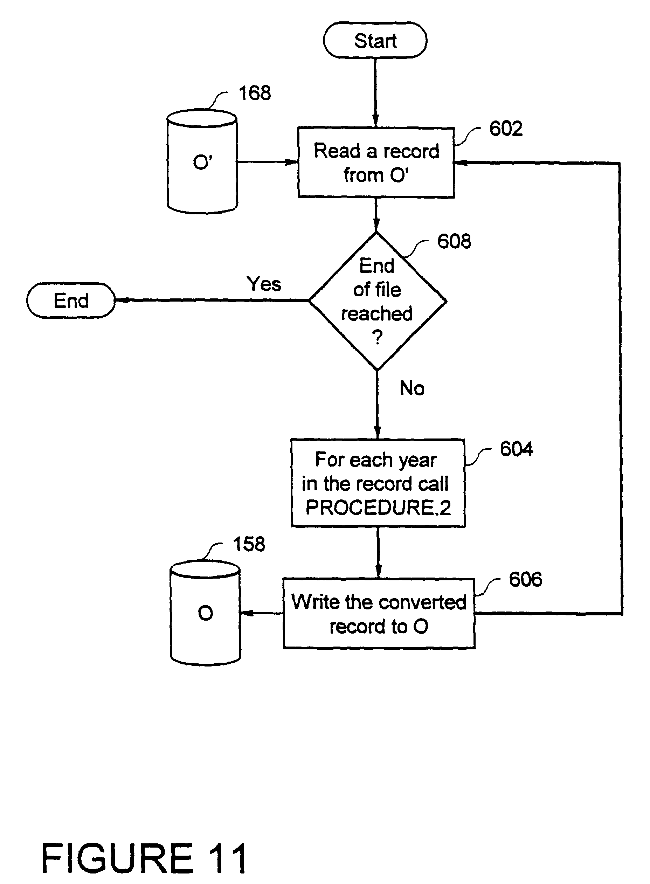

Figure 11 shows a detailed flow diagram of the zone output data conversion process shown at step 600 in Figure 6. A record is read from O' 168 as shown at step 602. Once each of the records in O' has been read and processed in accordance with steps 602, 604, and 606 as determined by step 608 the output file conversion process is complete. For each year in the record, PROCEDURE.2 is called to convert the year represented in zone time to local time in accordance with the steps shown in detail in Figure 5. Once the date data is converted, the output date data is written to output data file (O) 158 at step 606.

As mentioned above, a value is preselected for the value assigned to year.change. The selection of the value may depend on many factors and may differ from system-to-system and from application-to-application. In a preferred embodiment, the value of year.change is selected as a multiple integer of 4. However, the invention is not intended to be limited thereto. A value that is an integer multiple of 4 will permit an application to continue processing date-dependent information with existing routines for handling leap years. For example, the year 2000 is a leap year and accordingly includes an extra day in February. If the value of year.change is 20, an integer multiple of 4, the year 2000 is represented in zone time as 80 (corresponding to 1980) which was also a leap year. Moreover, if a multiple of 28 years is used, then the days of the week will also remain the same between dates represented in local time and those represented in zone time.

Another consideration in selecting the value of year.change is the desired zone time span. If year.change is 20, then the zone time span is 1920 to 2019 as explained above. In contrast, if the value of year.change is 56, then the zone time span is 1956 to 2055. Therefore, the greater the value of year.change, the further into the future the zone time span will extend. In systems that have computational years that date back many years, a lower value of year change may be preferable so that a minimal number of records is removed during the initialization process. For example, if there are no computational years in the input data files or master data files prior to 1956, then a value of 56 for year.change may be appropriate and would provide the entity employing the invention the option to wait until 2055 to retire or replace the application. If there are a number of computational years in the input or master data files that are prior to 1928, for example, then a better selection for the value of year.change might be a multiple of 4 that is less than 28 that will minimize the number of records to be removed, while providing sufficient time to retire or replace the existing application.

In the great majority of cases use of the invention will not require the user to make any program changes with the exception of the following: if a program uses a year as a search argument in a table and it is not possible to modify the table keys, then the program is preferably changed to adjust the search argument before a lookup is performed; and, when a program uses the year as information to generate a new datum, such as a part number or a policy number, the program preferably adjusts the year before using it in such a way.

It should be understood that the use of time change interfaces as described herein provides a simple and cost effective solution to the turn-of-the-century problem. In addition, the invention is designed and implemented in a manner that can be easily tested in advance of its actual implementation. Referring back to Figures 3A and 3B, a set of test input data may be generated in which all of the dates are in one century. The test data is provided as an input to the application P when the invention is deactivated as in Figure 3A. The application P processes the test input data resulting in test output data (O). If the same test data is provided as an input to the application P when the invention is activated as shown in Figure 3B, the resulting output data written to O should be identical to the test output data generated by the application P when the invention is deactivated. If the output data written to output data file (O) in Figure 3B and the test output data are not identical, the time change interfaces can be investigated as the primary source of error since none of the application code is modified by the invention. Thus, the use of the zone switch in addition to the interface design of the present invention enables the invention to be easily tested.

The invention can be implemented on any general purpose programmable computer such as: IBM 390, IBM 370, DEC VAX, SUN SPARKSTATION, IBM compatible personal computers, and Apple Macintosh computers. In a preferred embodiment, the input date data and the output date data can reside on and can be transferred to and from a variety of devices such as rigid magnetic disks, flexible magnetic media, optical disks, paper tape, punched cards, and remote terminals electronically linked to the computer. When activated the invention preferably becomes an integral component of the machine or computer, coordinating all of its physical actions.

While the invention has been described and illustrated with reference to specific embodiments, those skilled in the art will recognize that modification and variations may be made without departing from the principles of the invention as described hereinabove and set forth in the following claims. For example, though most of the examples presented show simplified batch systems the principles embodied in the invention can be applied to the most complex applications whether batch or online. Also, it should be understood that instead of the local time being adjusted backward to put all dates in the 20th century when converting to zone time, local time can be adjusted forward in time to put all dates in the 21st century. Similarly, zone time may be adjusted backward in time to convert to local time if the local time is adjusted forward in time to convert to zone time. In addition, it should also be understood that the present invention handles turn-of-the-century problems that occur in calendar years other than the year 2000 and the invention can be applied to computer systems at any time prior to year 2000 and can remain in place until the year 2000 plus the year.change. Accordingly, the year 2000 has been used herein for exemplary purposes only.

## Claims

1. A system for processing date-dependent information including dates spanning no more than 100 years wherein the date-dependent information comprises a year field specified in a two-digit format, the system comprising:-
a number of local data files (114, 115, 152, 154) having dates represented in local time;
a number of zone data files (102-104, 111, 113, 162, 164, 166, 168) having dates represented in zone time, the dates represented in zone time being processed by a selected application (100, 150); and
at least one time change means (108-110, 160, 170) interfaced between the local data files and the zone data files for converting the dates represented in local time to dates represented in zone time such that the latter dates fall in one and the same century and for converting the dates represented in zone time to dates represented in local time.

2. The system of claim 1, wherein the local data files comprise at least one external data file (114, 115) that is generated and modified by a source external to the selected application.

3. The system of either of claims 1 and 2, wherein the selected application comprises a master data file (154) having dates represented in local time and wherein at least one time change means (160) is adapted to interface with the selected application to convert the dates in the master file from local time to zone time.

4. The system of any preceding claim, further comprising:
a zone switch means (151) interfaced to each time change means for activating and deactivating the time change means.

5. The system of any preceding claim, wherein the system comprises a plurality of time change means, wherein at least one of the time change mans (160) converts only the dates represented in local time to dates represented in zone time and wherein at least one other time change means (170) converts only the dates represented in zone time to dates represented in local time.

6. The system of any preceding claim, wherein the relative difference between the local time and the zone time is represented by a number of yeas that is a multiple integer of 4.

7. The system of any preceding claim, wherein the at least one time change means comprises:
means (172) for accepting a year change value representing the relative difference between the local time and the zone time;
means (173) for generating a complement value representing the difference between one hundred years and the year change value;
means (174, 176) for adjusting each year in the local data files to be input to the selected application by one of the complement value and the year change value so that all of the years input to the selected application are in one century; and
means (181, 182, 184, 186) for adjusting each year in the zone data files that have been output from the selected application by one of the complement value and the time change value so that all of the years output from the selected application are represented in local time.

8. A system for processing dates in which the year filed of the dates is specified in two-digit format and wherein the dates span no more than 100 years, the system comprising:
an application having a master data file (102) comprising records having dates represented in zone time whereby dates represented in zone time all fall in one and the same century and having at least one program (106) for processing the records;
a first external data file (114) comprising input date data having dates represented in local time, the first external data file comprising records of which at least some correspond to records of the master data file;
a first time change means (108) interfaced to read from the first external data file and for converting the input date data into zone input date data and for writing the zone input date data to a zone input file (104), wherein the application reads the zone input date data and processes the zone input date data with corresponding records of the master data file to update the master data file and to generate zone output date data, the zone output date data being written to a zone output file (111) by the application;
a second time change means (109) interfaced to read from the zone output file and for converting the zone output date data into output date data wherein the output date data is represented in local time;
a second external data file (114) interfaced with the second time change means such that the output date data is written to the second external data file; and
the program being unaffected by the first time change means and the second time change means.

9. The system of claim 8, wherein the relative difference between dates represented in zone time and the same dates represented in local time is 56 years.

10. The system of either of claims 8 and 9, further comprising:
a source (116) of on-line input date data to be processed by the application and having dates represented in local time:
an output of on-line output date data generated by the application and having dates represented in local time;
wherein the application further comprises a third time change means (117) interfaced to accept an input of the on-line input date data and to output on-line output date data for converting the dates represented in local time to dates represented in zone time, and for converting the dates represented in zone time to dates represented in local time.

11. A method for processing date-dependent information using a computer system, the date-dependent information including dates spanning no more than 100 years wherein the date-dependent information comprises a year field specified in a two-digit format, the method comprising the steps of:
converting (108, 160) input date data to be processed from local time to zone time whereby dates represented in zone time all fall in one and the same century and defining the input date data so converted as zone input date data;
processing (104, 106, 150) the zone input date data in accordance with an existing application integrated into the computer system to generate zone output date data; and
converting (109, 170) the zone output date data into output date data that is in local time.

12. The method of claim 11, wherein input date data comprises a number of input years, the step of converting (108, 160) the input date data from local time to zone time comprises the steps of:
defining a time change indicative of a number of years to adjust the local time; and
subtracting (176) the time change from at least some of the input years to generate output years represented in zone time that are processed in accordance with the selected application.

13. The method of claim 12, wherein the zone output date data comprises a number of input years represented in zone time, the step of converting (109, 170) the zone output date data into output date data comprises the step of:
adding (186) the time change to at least some of the input years of the zone output date data to generate output years represented in local time.

14. The method of either of claims 12 and 13, wherein the step (108, 160) of converting the input date data from local time to zone time further comprises the steps of:
generating (173) a complement value representing the difference between one hundred years and the time change;
adding (174) the complement value to each input year that is less than the time change to generate an output year represented in zone time that is processed in accordance with the selected application.

15. The method of any of claims 12 to 14, wherein the step of converting (160) the input date data from local time to zone time further comprises the steps of:
generating (173) a complement value representing the difference between one hundred years and the time change;
adding (174) the complement value to each input year that is less than the time change to generate an output year represented in zone time that is processed in accordance with the selected application; and
wherein the zone output date data comprises a number of input years represented in zone time, the step of converting (170) the zone output date data into output date data comprises the steps of:
adding (186)the time change to at least some of the input years represented in zone time to generate corresponding output years represented in local time; and
subtracting (184) the complement value from each input year represented zone time that is not less than the complement value to generate a corresponding output year represented in local time.

16. The method of any of claims 11 to 15, further comprising the step of:
providing a zone switch (151) for use in activating and deactivating the step of converting (160) the input date data to be processed from local time to zone time and the step of converting (170) the zone output date data into output date data.

17. The method of claim 16, further comprising the step of:
generating test input data comprising dates in one century;
deactivating the steps of converting the date data;
processing the test input data in accordance with the selected application to generate test output data;
activating the steps of converting the date data;
providing the test input data as the input date data whereby corresponding output date data is generated in accordance with the steps set forth in claim 11; and
comparing the output test data and the output date data to verify that the output date data is identical to the output test data.

18. The method of any of claims 11 to 17, wherein the relative difference between the local time and the zone time is 56 years.

19. The method of any of claims 11 to 17, wherein the relative difference between the local time and the zone time is represented by a number of years that is a multiple integer of 4.

20. The method of any of claims 11 to 19, wherein the selected application comprises a master data file (154) having master date data represented in local time, the method further comprising the steps of:
converting (160) the master date data from local time to zone time; and
modifying (150) the master data file based on the zone input date data in accordance with the selected application.

## Patentansprüche

1. System zum Verarbeiten von zeitdatenabhängigen Informationen mit Zeitdaten, die nicht mehr als 100 Jahre überspannen, wobei die zeitdatenabhängigen Informationen ein Jahresfeld aufweisen, das in einem zweistelligen Format spezifiziert ist, wobei das System folgendes aufweist:
eine Anzahl von Ortsdaten-Dateien (114, 115, 152, 154) mit Zeitdaten, die in Ortszeit dargestellt sind;
eine Anzahl von Zonendaten-Dateien (102-104, 111, 113, 162, 164, 166, 168) mit Zeitdaten, die in Zonenzeit dargestellt sind, wobei die in Zonenzeit dargestellten Zeitdaten durch eine ausgewählte Anwendung (100, 150) verarbeitet werden; und
wenigstens eine Zeitänderungseinrichtung (108-110, 160, 170), die eine Schnittstelle zwischen den Ortsdaten-Dateien und den Zonendaten-Dateien bildet, zum Umwandeln der in Ortszeit dargestellten Zeitdaten in in Zonenzeit dargestellte Zeitdaten, so daß die letzteren Zeitdaten in ein und dasselbe Jahrhundert fallen, und zum Umwandeln der in Zonenzeit dargestellten Zeitdaten in in Ortszeit dargestellte Zeitdaten.

2. System nach Anspruch 1, wobei die Ortsdaten-Dateien wenigstens eine externe Datendatei (114, 115) aufweisen, die durch eine Quelle erzeugt und modifiziert wird, die extern zur ausgewählten Anwendung ist.

3. System nach einem der Ansprüche 1 oder 2, wobei die ausgewählte Anwendung eine Masterdaten-Datei (154) aufweist, die in Ortszeit dargestellte Zeitdaten aufweist, und wobei wenigstens eine Zeitänderungseinrichtung (160) dazu geeignet ist, eine Schnittstelle zu der ausgewählten Anwendung zu bilden, um die Zeitdaten in der Masterdatei aus der Ortszeit in die Zonenzeit umzuwandeln.

4. System nach einem der vorangehenden Ansprüche, das weiterhin folgendes aufweist:
eine Zonen-Umschalteinrichtung (151), die mit jeder Zeitänderungseinrichtung eine Schnittstelle bildet, zum Aktivieren und zum Deaktivieren der Zeitänderungseinrichtung.

5. System nach einem der vorangehenden Ansprüche, wobei das System eine Vielzahl von Zeitänderungseinrichtungen aufweist, wobei wenigstens eine der Zeitänderungseinrichtungen (160) nur die in Ortszeit dargestellten Zeitdaten in in Zonenzeit dargestellte Zeitdaten umwandelt, und wobei wenigstens eine andere Zeitänderungseinrichtung (170) nur die in Zonenzeit dargestellten Zeitdaten in in Ortszeit dargestellte Zeitdaten umwandelt.

6. System nach einem der vorangehenden Ansprüche, wobei die relative Differenz zwischen der Ortszeit und der Zonenzeit durch eine Anzahl von Jahren dargestellt ist, die ein vielfaches Ganzzahliges von 4 ist.

7. System nach einem der vorangehenden Ansprüche, wobei die wenigstens eine Zeitänderungseinrichtung folgendes aufweist:
eine Einrichtung (172) zum Annehmen eines Jahresänderungswerts, der die relative Differenz zwischen der Ortszeit und der Zonenzeit darstellt;
eine Einrichtung (173) zum Erzeugen eines komplementären Werts, der die Differenz zwischen einhundert Jahren und dem Jahresänderungswert darstellt;
eine Einrichtung (174, 176) zum Einstellen jedes zur ausgewählten Anwendung einzugebenden Jahres in den Ortsdaten-Dateien durch entweder den komplementären Wert oder den Jahresänderungswert, so daß alle zur ausgewählten Anwendung eingegebenen Jahre in einem Jahrhundert sind; und
eine Einrichtung (181, 182, 184, 186) zum Einstellen jedes Jahres in den Zonendaten-Dateien, das von der ausgewählten Anwendung ausgegeben worden sind, durch entweder den komplementären Wert oder den Zeitänderungswert, so daß alle von der ausgewählten Anwendung ausgegebenen Jahre in Ortszeit dargestellt sind.

8. System zum Verarbeiten von Zeitdaten, bei welchen das Jahresfeld der Zeitdaten in einem zweistelligen Format spezifiziert ist, und wobei die Zeitdaten nicht mehr als 100 Jahre überspannen, wobei das System folgendes aufweist:
eine Anwendung mit einer Masterdaten-Datei (102), die Datensätze aufweist, welche in Zonenzeit dargestellte Zeitdaten haben, wobei in Zonenzeit dargestellte Zeitdaten alle in ein und dasselbe Jahrhundert fallen, und welche wenigstens ein Programm (106) zum Verarbeiten der Datensätze haben;
eine erste externe Datendatei (114), die Eingangs-Zeitdatendaten mit in Ortszeit dargestellten Zeitdaten aufweist, wobei die erste externe Datendatei Datensätze aufweist, von welchen wenigstens einige den Datensätzen der Masterdaten-Datei entsprechen;
eine erste Zeitänderungseinrichtung (108), die eine Schnittstelle ist, um aus der ersten externen Datendatei zu lesen, und zum Umwandeln der Eingangs-Zeitdatendaten in Zoneneingangs-Zeitdatendaten und zum Schreiben der Zoneneingangs-Zeitdatendaten zu einer Zoneneingangsdatei (104), wobei die Anwendung die Zoneneingangs-Zeitdatendaten liest und die Zoneneingangs-Zeitdatendaten mit entsprechenden Datensätzen der Masterdaten-Datei verarbeitet, um die Masterdaten-Datei einem Updaten zu unterziehen und um Zonenausgangs-Zeitdatendaten zu erzeugen, wobei die Zonenausgangs-Zeitdatendaten durch die Anwendung zu einer Zonenausgangsdatei (111) geschrieben werden;
eine zweite Zeitänderungseinrichtung (109), die eine Schnittstelle ist, um aus der Zonenausgangsdatei zu lesen, und zum Umwandeln der Zonenausgangs-Zeitdatendaten in Ausgangs-Zeitdatendaten, wobei die Ausgangs-Zeitdatendaten in Ortszeit dargestellt sind;
eine zweite externe Datendatei (114), die eine Schnittstelle zur zweiten Zeitänderungseinrichtung bildet, so daß die Ausgangs-Zeitdatendaten zur zweiten externen Datendatei geschrieben werden; und
wobei das Programm durch die erste Zeitänderungseinrichtung und die zweite Zeitänderungseinrichtung unbeeinflußt bleibt.

9. System nach Anspruch 8, wobei die relative Differenz zwischen in Zonenzeit dargestellten Zeitdaten und denselben in Ortszeit dargestellten Zeitdaten 56 Jahre ist.

10. System nach einem der Ansprüche 8 oder 9, das weiterhin folgendes aufweist:
eine Quelle (116) für Online-Eingangs-Zeitdatendaten, die durch die Anwendung zu verarbeiten sind und in Ortszeit dargestellte Zeitdaten haben;
einen Ausgang für Online-Ausgangs-Zeitdatendaten, die durch die Anwendung erzeugt sind und in Ortszeit dargestellte Zeitdaten haben;
wobei die Anwendung weiterhin eine dritte Zeitänderungseinrichtung (117) aufweist, die eine Schnittstelle ist, um eine Eingabe der Online-Eingangs-Zeitdatendaten anzunehmen und um Online-Ausgangs-Zeitdatendaten auszugeben, zum Umwandeln der in Ortszeit dargestellten Zeitdaten in in Zonenzeit dargestellte Zeitdaten und zum Umwandeln der in Zonenzeit dargestellten Zeitdaten in in Ortszeit dargestellte Zeitdaten.

11. Verfahren zum Verarbeiten von zeitdatenabhängigen Informationen unter Verwendung eines Computersystems, wobei die zeitdatenabhängigen Informationen Zeitdaten enthalten, die nicht mehr als 100 Jahre überspannen, wobei die zeitdatenabhängigen Informationen ein Jahresfeld aufweisen, das in einem zweistelligen Format spezifiziert ist, wobei das Verfahren die folgenden Schritte aufweist:
Umwandeln (108, 160) von zu verarbeitenden Eingangs-Zeitdatendaten aus einer Ortszeit in eine Zonenzeit, wobei in Zonenzeit dargestellte Zeitdaten alle in ein und dasselbe Jahrhundert fallen, und Definieren der so umgewandelten Eingangs-Zeitdatendaten als Zoneneingangs-Zeitdatendaten;
Verarbeiten (104, 106, 150) der Zoneneingangs-Zeitdatendaten gemäß einer existierenden Anwendung, die in das Computersystem integriert ist, um Zonenausgangs-Zeitdatendaten zu erzeugen; und
Umwandeln (109, 170) der Zonenausgangs-Zeitdatendaten in Ausgangs-Zeitdatendaten, die in Ortszeit sind.

12. Verfahren nach Anspruch 11, wobei Eingangs-Zeitdatendaten eine Anzahl von Eingangsjahren aufweisen, wobei der Schritt zum Umwandeln (108, 160) der Eingangs-Zeitdatendaten aus der Ortszeit in die Zonenzeit die folgenden Schritte aufweist:
Definieren einer Zeitänderung, die eine Anzahl von Jahren anzeigt, um die Ortszeit einzustellen; und
Subtrahieren (176) der Zeitänderung von wenigstens einigen der Eingangsjahre, um in Zonenzeit dargestellte Ausgangsjahre zu erzeugen, die gemäß der ausgewählten Anwendung verarbeitet werden.

13. Verfahren nach Anspruch 12, wobei die Zonenausgangs-Zeitdatendaten eine Anzahl von in Zonenzeit dargestellten Eingangsjahren aufweisen, wobei der Schritt zum Umwandeln (109, 170) der Zonenausgangs-Zeitdatendaten in Ausgangs-Zeitdatendaten den folgenden Schritt aufweist:
Addieren (186) der Zeitänderung zu wenigstens einigen der Eingangsjahre der Zonenausgangs-Zeitdatendaten, um Ausgangsjahre zu erzeugen, die in Ortszeit dargestellt sind.

14. Verfahren nach einem der Ansprüche 12 oder 13, wobei der Schritt (108, 160) zum Umwandeln der Eingangs-Zeitdatendaten aus der Ortszeit in die Zonenzeit weiterhin die folgenden Schritte aufweist:
Erzeugen (173) eines komplementären Wertes, der die Differenz zwischen einhundert Jahren und der Zeitänderung darstellt;
Addieren (174) des komplementären Wertes zu jedem Eingangsjahr, das kleiner als die Zeitänderung ist, um ein in Zonenzeit dargestelltes Ausgangsjahr zu erzeugen, das gemäß der ausgewählten Anwendung verarbeitet wird.

15. Verfahren nach einem der Ansprüche 12 bis 14, wobei der Schritt zum Umwandeln (160) der Eingangs-Zeitdatendaten aus der Ortszeit in die Zonenzeit weiterhin die folgenden Schritte aufweist:
Erzeugen (173) eines komplementären Wertes, der die Differenz zwischen einhundert Jahren und der Zeitänderung darstellt;
Addieren (174) des komplementären Wertes zu jedem Eingangsjahr, das kleiner als die Zeitänderung ist, um ein in Zonenzeit dargestelltes Ausgangsjahr zu erzeugen, das gemäß der ausgewählten Anwendung verarbeitet wird;
wobei die Zonenausgangs-Zeitdatendaten eine Anzahl von in Zonenzeit dargestellten Eingangsjahren aufweisen, wobei der Schritt zum Umwandeln (170) der Zonenausgangs-Zeitdatendaten in Ausgangs-Zeitdatendaten die folgenden Schritte aufweist:
Addieren (186) der Zeitänderung zu wenigstens einigen der in Zonenzeit dargestellten Eingangsjahre, um entsprechende in Ortszeit dargestellte Ausgangsjahre zu erzeugen; und
Subtrahieren (184) des komplementären Wertes von jedem in Zonenzeit dargestellten Eingangsjahr, das nicht kleiner als der komplementäre Wert ist, um ein entsprechendes in Ortszeit dargestelltes Ausgangsjahr zu erzeugen.

16. Verfahren nach einem der Ansprüche 11 bis 15, das weiterhin die folgenden Schritte aufweist:
Bereitstellen eines Zonenschalters (151) zur Verwendung beim Aktivieren und Deaktivieren des Schritts zum Umwandeln (160) der zu verarbeitenden Eingangs-Zeitdatendaten aus der Ortszeit in die Zonenzeit und des Schritts zum Umwandeln (170) der Zonenausgangs-Zeitdatendaten in Ausgangs-Zeitdatendaten.

17. Verfahren nach Anspruch 16, das weiterhin die folgenden Schritte aufweist:
Erzeugen von Testeingangsdaten, die Zeitdaten in einem Jahrhundert aufweisen;
Deaktivieren der Schritte zum Umwandeln der Zeitdatendaten;
Verarbeiten der Testeingangsdaten gemäß der ausgewählten Anwendung, um Testausgangsdaten zu erzeugen;
Aktivieren der Schritte zum Umwandeln der Zeitdatendaten;
Bereitstellen der Testeingangsdaten als die Eingangs-Zeitdatendaten, wodurch entsprechende Ausgangs-Zeitdatendaten gemäß den im Anspruch 11 aufgezeigten Schritte erzeugt werden; und
Vergleichen der Ausgangstestdaten und der Ausgangs-Zeitdatendaten, um zu verifizieren, daß die Ausgangs-Zeitdatendaten identisch zu den Ausgangstestdaten sind.

18. Verfahren nach einem der Ansprüche 11 bis 17, wobei die relative Differenz zwischen der Ortszeit und der Zonenzeit 56 Jahre ist.

19. Verfahren nach einem der Ansprüche 11 bis 17, wobei die relative Differenz zwischen der Ortszeit und der Zonenzeit durch eine Anzahl von Jahren dargestellt wird, die ein vielfaches Ganzzahliges von 4 ist.

20. Verfahren nach einem der Ansprüche 11 bis 19, wobei die ausgewählte Anwendung eine Masterdaten-Datei (154) mit in Ortszeit dargestellten Master-Zeitdatendaten aufweist, wobei das Verfahren weiterhin die folgenden Schritte aufweist:
Umwandeln (160) der Master-Zeitdatendaten aus der Ortszeit in die Zonenzeit; und
Modifizieren (150) der Masterdaten-Datei basierend auf den Zoneneingangs-Zeitdatendaten gemäß der ausgewählten Anwendung.

## Revendications

1. Système de traitement d'informations dépendantes de la date mettant en jeu des dates ne s'étendant pas sur plus de 100 ans, dans lequel les informations dépendantes de la date comprennent un champ pour l'année, spécifié dans un format à deux chiffres, le système comprenant :
- un nombre de fichiers de données locales (114, 115, 152, 154) ayant des dates représentées en temps local ;
- un nombre de fichiers de données de zone (102-104, 111, 113, 162, 164, 166, 168) ayant des dates représentées en temps de zone, les dates représentées en temps de zone étant traitées par une application sélectionnée (100, 150) ; et
- au moins un moyen de changement de temps (108-110, 160, 170) interfacé entre les fichiers de données locales et les fichiers de données de zone pour convertir les dates représentées en temps local en dates représentées en temps de zone, de telle sorte que ces dernières dates tombent dans un seul et même siècle, et pour convertir les dates représentées en temps de zone en dates représentées en temps local.

2. Système selon la revendication 1, dans lequel les fichiers de données locales comprennent au moins un fichier de données externes (114, 115) qui est généré et modifié par une source externe à l'application sélectionnée.

3. Système selon l'une des revendications 1 et 2, dans lequel l'application sélectionnée comprend un fichier de données permanentes (154) ayant des dates représentées en temps local et dans lequel au moins un moyen de changement de temps (160) est apte à s'interfacer avec l'application sélectionnée afin de convertir les dates dans le fichier de données permanentes du temps local au temps de zone.

4. Système selon l'une quelconque des revendications précédentes, comprenant en outre un moyen de commutation de zone (151) interfacé avec chaque moyen de changement de temps afin d'activer et de désactiver les moyens de changement de temps.

5. Système selon l'une quelconque des revendications précédentes, dans lequel le système comprend une pluralité de moyens de changement de temps, dans lequel au moins l'un des moyens de changement de temps (160) convertit seulement les dates représentées en temps local en dates représentées en temps de zone, et dans lequel au moins un autre moyen de changement de temps (170) convertit seulement les dates représentées en temps de zone en dates représentées en temps local.

6. Système selon l'une quelconque des revendications précédentes, dans lequel la différence relative entre le temps local et le temps de zone est représentée par un nombre d'années qui est un entier multiple de 4.

7. Système selon l'une quelconque des revendications précédentes, dans lequel ledit au moins un moyen de changement de temps comprend :
- des moyens (172) pour recevoir une valeur de changement d'année représentant la différence relative entre le temps local et le temps de zone ;
- des moyens (173) pour générer une valeur complémentaire représentant la différence entre cent années et la valeur de changement d'année ;
- des moyens (174, 176) pour ajuster chaque année dans les fichiers de données locales pour être une entrée de l'application sélectionnée par l'une de la valeur complémentaire et de la valeur de changement d'année, de telle sorte que toutes les entrées d'années de l'application sélectionnée soient dans un même siècle ; et
- des moyens (181, 182, 184, 186) pour ajuster chaque année dans les fichiers de données de zone qui ont été une sortie de l'application sélectionnée par l'une de la valeur complémentaire et de la valeur de changement de temps, de telle sorte que toutes les sorties d'années de l'application sélectionnée soient représentées en temps local.

8. Système de traitement de dates dans lequel le champ d'année des dates est spécifié dans un format à deux chiffres et dans lequel les dates ne s'étendent pas sur plus de 100 ans, le système comprenant :
- une application ayant un fichier de données permanentes (102) comprenant des enregistrements ayant des dates représentées en temps de zone, ce par quoi des dates représentées en temps de zone tombent toutes dans un seul et même siècle, et possédant au moins un programme (106) pour traiter les enregistrements ;
- un premier fichier de données externes (114) comprenant des données de date d'entrée ayant des dates représentées en temps local, le premier fichier de données externes comprenant des enregistrements dont au moins certains correspondent à des enregistrements du fichier de données permanentes ;
- un premier moyen de changement de temps (108) interfacé pour lire des données provenant du premier fichier de données externes et pour convertir les données de date d'entrée en données de date d'entrée de zone et pour écrire les données de date d'entrée de zone dans un fichier d'entrée de zone (104), l'application lisant les données de date d'entrée de zone et traitant les données de date d'entrée de zone avec des enregistrements correspondants du fichier de données permanentes afin de mettre à jour le fichier de données permanentes et de générer des données de date de sortie de zone, les données de date de sortie de zone étant écrites, par l'application, dans un fichier de sortie de zone (111) ;
- un deuxième moyen de changement de temps (109) interfacé pour lire des données provenant du fichier de sortie de zone et pour convertir les données de date de sortie de zone en données de date de sortie, les données de date de sortie étant représentées en temps local ;
- un second fichier de données externes (114) interfacé avec le deuxième moyen de changement de temps de telle sorte que les données de date de sortie soient écrites dans le second fichier de données externes ; et
- le programme n'étant affecté ni par le premier moyen de changement de temps ni par le deuxième moyen de changement de temps.

9. Système selon la revendication 8, dans lequel la différence relative entre des dates représentées en temps de zone et les mêmes dates représentées en temps local est de 56 ans.

10. Système selon l'une des revendications 8 et 9, comprenant en outre :
- une source (116) de données en ligne de date d'entrée, destinées à être traitées par l'application et ayant des dates représentées en temps local ;
- une sortie de données en ligne de date de sortie, générées par l'application et ayant des dates représentées en temps local ;
- l'application comprenant en outre un troisième moyen de changement de temps (117) interfacé pour recevoir en entrée les données en ligne de date d'entrée et pour délivrer en sortie des données en ligne de date de sortie, afin de convertir les dates représentées en temps local en dates représentées en temps de zone, et afin de convertir les dates représentées en temps de zone en dates représentées en temps local.

11. Procédé de traitement d'informations dépendantes de la date utilisant un système informatique, les informations dépendantes de la date mettant en jeu des dates ne s'étendant pas sur plus de 100 ans, dans lequel les informations dépendantes de la date comprennent un champ pour l'année spécifié dans un format à deux chiffres, le procédé comprenant les étapes consistant à :
- convertir (108, 160) des données de date d'entrée destinées à être traitées du temps local au temps de zone, ce par quoi des dates représentées en temps de zone tombent toutes dans un seul et même siècle, et définir les données de date d'entrée ainsi converties en tant que données de date d'entrée de zone ;
- traiter (104, 106, 150) les données de date d'entrée de zone suivant une application existante intégrée au système informatique afin de générer des données de date de sortie de zone ; et
- convertir (109, 170) les données de date de sortie de zone en données de date de sortie, c'est-à-dire en temps local.

12. Procédé selon la revendication 11, dans lequel des données de date d'entrée comprennent un nombre d'années d'entrée, l'étape de conversion (108, 160) des données de date d'entrée du temps local au temps de zone comprenant les étapes consistant à :
- définir un changement de temps indicatif d'un nombre d'années pour ajuster le temps local ; et
- soustraire (176) le changement de temps d'au moins certaines des années d'entrée afin de générer des années de sortie représentées en temps de zone qui sont traitées suivant l'application sélectionnée.

13. Procédé selon la revendication 12, dans lequel les données de date de sortie de zone comprennent un nombre d'années d'entrée représentées en temps de zone, l'étape de conversion (109, 170) des données de date de sortie de zone en données de date de sortie comprenant l'étape consistant à :
- ajouter (186) le changement de temps à au moins certaines des années d'entrée des données de date de sortie de zone afin de générer des années de sortie représentées en temps local.

14. Procédé selon l'une des revendications 12 et 13, dans lequel l'étape (108, 160) de conversion des données de date d'entrée du temps local au temps de zone comprend en outre les étapes consistant à :
- générer (173) une valeur complémentaire représentant la différence entre cent ans et le changement de temps ;
- ajouter (174) la valeur complémentaire à chaque année d'entrée qui est inférieure au changement de temps afin de générer une année de sortie, représentée en temps de zone, qui est traitée suivant l'application sélectionnée.

15. Procédé selon l'une quelconque des revendications 12 à 14, dans lequel l'étape de conversion (160) des données de date d'entrée du temps local au temps de zone comprend en outre les étapes consistant à :
- générer (173) une valeur complémentaire représentant la différence entre cent ans et le changement de temps ;
- ajouter (174) la valeur complémentaire à chaque année d'entrée qui est inférieure au changement de temps afin de générer une année de sortie représentée en temps de zone qui est traitée suivant l'application sélectionnée ;
et dans lequel les données de date de sortie de zone comprennent un nombre d'années d'entrée représentées en temps de zone, l'étape de conversion (170) de données de date de sortie de zone en données de date de sortie comprenant les étapes consistant à :
- ajouter (186) le changement de temps à au moins certaines des années d'entrée représentées en temps de zone afin de générer des années de sortie correspondantes représentées en temps local ; et
- soustraire (184) la valeur complémentaire de chaque année d'entrée représentée en temps de zone qui n'est pas inférieure à la valeur complémentaire afin de générer une année de sortie correspondante représentée en temps local.

16. Procédé selon l'une quelconque des revendications 11 à 15, comprenant en outre l'étape consistant à :
- prévoir une commutation de zone (151) pour permettre d'activer et de désactiver l'étape de conversion (160) des données de date d'entrée destinées à être traitées du temps local au temps de zone et l'étape de conversion (170) des données de date de sortie de zone en données de date de sortie.

17. Procédé selon la revendication 16, comprenant en outre les étapes consistant à :
- générer des données d'entrée de test comportant des dates dans un siècle ;
- désactiver les étapes de conversion des données de date ;
- traiter les données d'entrée de test suivant l'application sélectionnée afin de générer des données de sortie de test ;
- activer les étapes de conversion de données de date ;
- fournir les données d'entrée de test en tant que données de date d'entrée, ce par quoi des données de date de sortie correspondantes sont générées suivant les étapes présentées dans la revendication 11 ; et
- comparer les données de test de sortie et les données de date de sortie afin de vérifier que les données de date de sortie sont identiques aux données de test de sortie.

18. Procédé selon l'une quelconque des revendications 11 à 17, dans lequel la différence relative entre le temps local et le temps de zone est de 56 ans.

19. Procédé selon l'une quelconque des revendications 11 à 17, dans lequel la différence relative entre le temps local et le temps de zone est représentée par un nombre d'années qui est un entier multiple de 4.

20. Procédé selon l'une quelconque des revendications 11 à 19, dans lequel l'application sélectionnée comprend un fichier de données permanentes (154) ayant des données de date permanentes représentées en temps local, le procédé comprenant en outre les étapes consistant à :
- convertir (160) les données de date permanentes du temps local au temps de zone ; et
- modifier (150) le fichier de données permanentes en fonction des données de date d'entrée de zone suivant l'application sélectionnée.
